(19) Europäisches Patentamt

European Patent Office

Office européen des brevets

(11) **EP 2 284 510 B1**

(12) **FASCICULE DE BREVET EUROPEEN**

(45) Date de publication et mention
de la délivrance du brevet:
**14.03.2012   Bulletin 2012/11**

(51) Int Cl.:
***G01J 3/45*** *(2006.01)*        ***G01J 3/453*** *(2006.01)*

(21) Numéro de dépôt: **10170621.6**

(22) Date de dépôt: **23.07.2010**

(54) **Interféromètre statique à champ compensé pour la spectroscopie a transformée de fourier**

Statischer Interferometer mit kompensiertem Feld für die Fourier-Transform-Spektrometrie

Field-compensated static interferometer for Fourier transform spectroscopy

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **07.08.2009   FR 0903904**

(43) Date de publication de la demande:
**16.02.2011   Bulletin 2011/07**

(73) Titulaire: **Thales
92200 Neuilly Sur Seine (FR)**

(72) Inventeurs:
  • **Buisson, Christophe
    06150, CANNES (FR)**
  • **Simeoni, Denis
    06150, CANNES (FR)**
  • **Astruc, Patrick
    06150, CANNES (FR)**
  • **Degrelle, Cyril
    06210 Mandelieu (FR)**

(74) Mandataire: **Esselin, Sophie et al
Marks & Clerk France
Conseils en Propriété Industrielle
Immeuble Visium
22, Avenue Aristide Briand
94117 Arcueil Cedex (FR)**

(56) Documents cités:
**CA-A1- 2 302 994**

**Description**

La présente invention concerne le domaine des interféromètres statiques. Plus particulièrement, l'invention se rapporte aux interféromètres utilisés pour la spectroscopie à transformée de Fourier, notamment dans le cadre de missions d'observations de la Terre et/ou de sondage atmosphérique.

Le domaine spectral qui s'applique à l'invention peut être notamment la bande infrarouge, la bande UV ou encore la bande visible.

Enfin, l'invention propose une solution au problème de l'effet d'auto-apodisation de champ dans un interféromètre statique utilisé pour la spectroscopie à transformée de Fourier.

Dans le cas d'un interféromètre statique, afin d'obtenir une variation intra-pupillaire de la différence de marche, une solution existante consiste à utiliser des miroirs, dit "miroirs de renvoi", comprenant des échelettes. Les miroirs de renvoi permettent la réflexion des faisceaux incidents, préalablement divisés par une lame séparatrice, pour être recombinés en sortie de l'interféromètre. Lors de la recombinaison, les franges d'interférences qui se forment présentent plus ou moins de contraste selon les performances de l'interféromètre et de la taille angulaire du champ analysé.

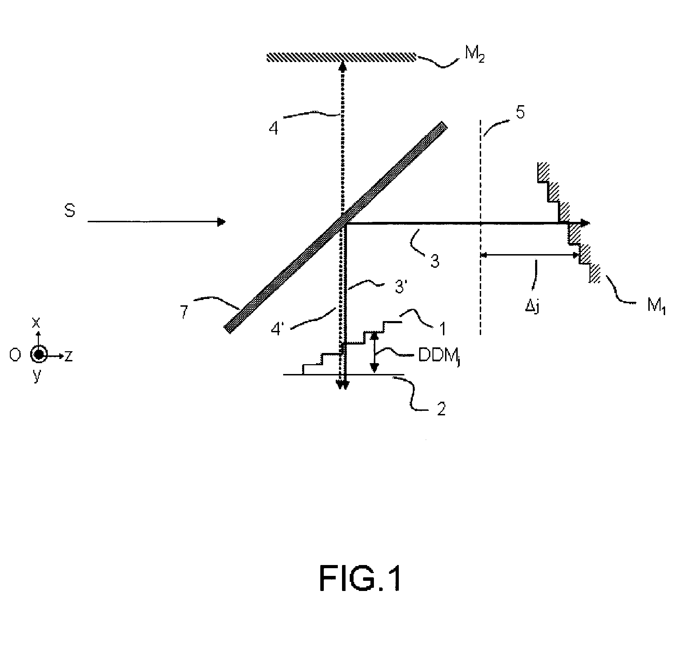

La figure 1 représente un cas de réalisation d'un interféromètre à échelettes de l'art antérieur comprenant une lame séparatrice 7 divisant le faisceau incident provenant d'une source S en un premier faisceau 4 se réfléchissant sur un miroir M2 et en un second faisceau 3 se réfléchissant sur un miroir à échelettes M1. Les deux faisceaux réfléchis 3' et 4' se recombinent après un second passage sur la lame séparatrice 7. La différence de marche, notée $DDM_j$, égale à la différence de chemin optique entre les ondes 1 et 2 en sortie de l'interféromètre, dépend de la distance $\Delta_j$, séparant l'échelette j du plan de référence 5 correspondant à la différence de marche nulle.

Cette solution permet également d'éviter tout déplacement des miroirs de renvoi par un dispositif souvent imposant.

Pour chaque échelette, la différence de marche varie en fonction de l'angle de champ, induisant dans le cas d'une source étendue une chute du contraste des franges d'interférence. C'est le phénomène d'auto-apodisation. Ce phénomène limite le champ maximum admissible par l'interféromètre et donc le champ de vue de l'instrument.

Un exemple d'un tel instrument est par exemple décrit dans CA230994.

L'objectif de la compensation de champ est d'annuler ou de réduire la dépendance de la différence de marche, notée plus généralement DDM, avec l'angle de champ.

La compensation de champ à été étudiée dans le cas d'interféromètres de Michelson pour lesquels la variation de la différence de marche est obtenue en balayant la position d'un miroir de l'un des bras de l'interféromètre le long de l'axe optique.

Le principe consiste à insérer dans l'un des bras de l'interféromètre une lame d'épaisseur, notée e, et d'indice, noté n.

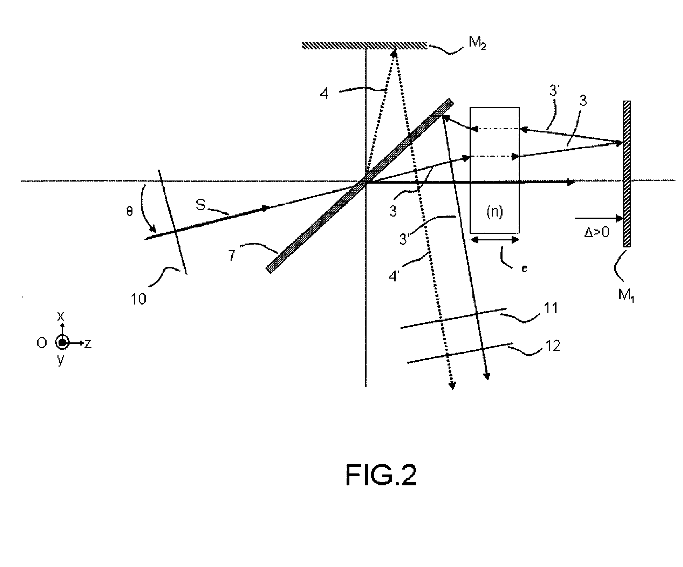

La figure 2 représente un tel dispositif lorsqu'un miroir $M_1$ est translaté d'une position à par rapport à un plan de référence.

Les faisceaux incidents provenant de la source S sont séparés sur une lame séparatrice 7 en deux faisceaux 3, 4 se réfléchissant respectivement sur un premier miroir $M_1$ et sur un second miroir $M_2$,

La différence de marche, notée $\delta_{12}$, entre les ondes qui interfèrent 3', 4' s'écrit alors en fonction de l'angle de champ $\theta$ :

$$\delta_{12}\left(e, \Delta, \theta\right) \approx 2.\left\{\left(n-1\right).e + \Delta + \frac{\theta^2}{2}.\left(\frac{n-1}{n}.e - \Delta\right)\right\}$$

Pour une position $\Delta_1$ du miroir $M_1$ par rapport au plan de référence, il existe donc une épaisseur de lame $e_1$ permettant d'annuler la dépendance de la différence de marche $\delta_{12}$ avec l'angle de champ $\theta$ :

$$e_1 = \Delta_1 \cdot n/(n-1)$$

La différence de marche $\delta_{12}(e1, \Delta_1)$ s'écrit alors :

$$\delta_{21} \approx 2 \cdot (n+1) \cdot \Delta_1$$

Cette différence de marche n'est pas nulle et ne dépend pas de l'angle de champ. Il y a une compensation de l'effet de champ sur l'interférogramme.

Un inconvénient d'une telle solution est que le dispositif fonctionne à condition que la différence de marche soit constante dans le plan de la pupille. En outre, ce dispositif doit être ajusté à chaque position $\Delta$ du miroir M1.

Cette solution ne fonctionne donc pas dans le cas d'un interféromètre statique à échelettes tel que représenté en figure 1. En effet, la différence de marche varie dans le plan de la pupille, chaque échelette étant placée à une position $\Delta_j$ qui varie d'une échelette à l'autre.

Un but de l'invention est de pallier les inconvénients précités.

L'interféromètre selon l'invention permet d'obtenir la compensation de champ dans le cas d'un interféromètre statique.

La solution de l'invention consiste à placer une lame de verre prismatique dans un bras de l'interféromètre.

Dans cette configuration, il est possible d'annuler la variation de la différence de marche, DDM, avec l'angle de champ tout en utilisant un miroir dont la surface réfléchissante se compose d'une pluralité de surfaces réfléchissantes appelées « échelettes » parallèles les unes aux autres et dont la position varie le long de l'axe optique.

En conséquence, l'angle de champ ne dégrade pas le contraste de l'interférogramme et l'auto-apodisation ne limite pas le champ de l'interféromètre. L'angle de champ de l'instrument peut donc être augmenté et la taille et la masse de l'interféromètre peuvent être réduites.

Avantageusement, Interféromètre statique comporte une pupille d'entrée, une lame séparatrice, un premier miroir et un second miroir agencés de façon à ce que des faisceaux lumineux provenant d'une source collimatée se divisent sur la lame séparatrice, se réfléchissent sur chacun des miroirs et se recomposent en interférant en sortie de l'interféromètre.

Avantageusement, l'interféromètre comporte au moins une lame prismatique d'indice n, comportant une épaisseur $e_j$ variable, le premier faisceau traversant la lame prismatique avant de se réfléchir sur une surface réfléchissante du premier miroir, la surface réfléchissante comportant une pluralité de zones, chaque zone j étant située à une distance moyenne $\Delta_j$ d'un plan de référence, la distance moyenne $\Delta_j$ variant d'une zone à une autre, le plan de référence étant perpendiculaire à un axe optique et correspondant à une position d'un miroir plan pour laquelle la différence de marche entre les deux faisceaux réfléchis interférant est nulle, le premier miroir M1 et la lame prismatique étant positionnés de telle manière que pour une zone j donnée chaque épaisseur $e_j$ est sensiblement égale à $\Delta_j \cdot n/(n-1)$.

Avantageusement, la lame prismatique comprend une face perpendiculaire à l'axe optique comportant une pluralité de surfaces identiques dont la position le long de l'axe optique varie de telle manière que la face de la lame forme un escalier.

Avantageusement, la lame prismatique comprend une face dont la pente moyenne forme un angle $\alpha_n$ prédéterminée par rapport au plan perpendiculaire à l'axe optique.

Avantageusement, le premier miroir est un miroir à échelettes.

Avantageusement, l'Interféromètre statique comprend un empilement de plusieurs tranches d'interféromètre, une lame à faces parallèles étant introduite dans une voie d'une tranche d'interféromètre afin de créer une continuité de différence de marche entre les différentes tranches.

Avantageusement, le premier miroir est situé à une distance prédéfinie de la lame prismatique et qu'il est incliné de façon à ce que les ondes soient réfléchies dans la même direction que les ondes incidentes.

Avantageusement, l'angle d'inclinaison $\alpha_n$ du prisme est sensiblement égal à

$$\alpha_n = \text{Arc} \tan \left( \frac{n}{2.\left(n^2 - 1\right)} \cdot \frac{DDM_T}{L_P} \right),$$ où n est l'indice de la lame, DDMT la variation de différence de marche totale crée par le dispositif et LP la largeur de la pupille de l'interféromètre.

Avantageusement, la distance inter-échelettes $\varepsilon$ le long de l'axe optique est sensiblement égal à

$$\varepsilon = \frac{DDM_T}{2.(n+1).N},$$ où N est le nombre d'échelettes que comprend le miroir.

Avantageusement, le premier miroir est accolé à l'une des faces de la lame prismatique.

Avantageusement, l'angle d'inclinaison $\alpha_n$ du prisme est sensiblement égal à

$$\alpha_n = Arc\tan\left(\frac{1}{2.n}.\frac{DDM_T}{L_P}\right)$$, où n est l'indice de la lame, DDMT la variation de différence de marche totale créé par le dispositif et LP la largeur de la pupille de l'interféromètre.

Avantageusement, la distance inter-échelettes $\varepsilon$ le long de l'axe optique est sensiblement égal à

$$\varepsilon = \frac{DDM_T}{2.n.N}$$, où N est le nombre d'échelettes que comprend le miroir.

Avantageusement, une seconde lame prismatique est accolée à la première lame dans une première voie de l'interféromètre, la première lame comportant un premier indice na et la seconde est positionnée dans une seconde voie de l'interféromètre, ladite lame comportant un indice identique à celui de la première lame.

Avantageusement, la première lame et la seconde lame comporte chacune au moins une face inclinée, la face inclinée de la première lame étant accolée à une face inclinée de la seconde lame, un premier angle $\alpha_a$ définissant l'inclinaison de la face inclinée de la première lame, un second angle $\alpha_b$ définissant l'inclinaison de la face inclinée de la seconde lame, les indices et les angles d'inclinaisons de chacune des lames étant déterminés de manière à rendre négligeable la variation de différence de marche avec la longueur d'onde en sortie de l'interféromètre.

D'autres caractéristiques et avantages de l'invention apparaîtront à l'aide de la description qui suit, faite en regard des dessins annexés qui représentent :

- la figure 1 : un interféromètre statique à échelettes de l'art antérieur ;
- la figure 2 : un interféromètre statique de Michelson à champ compensé de l'art antérieur ;
- la figure 3 : un interféromètre statique à échelettes à champ compensé comprenant des lames de verre selon un mode de réalisation de l'invention ;
- la figure 4 : un interféromètre statique à échelettes à champ compensé comprenant une lame prismatique prisme selon un mode de réalisation de l'invention ;
- La figure 5 : une lame prismatique en regard d'un miroir à échelettes ;
- La figure 6A : une première tranche d'interféromètre
- La figure 6B : une seconde tranche d'interféromètre
- La figure 7 : un interféromètre statique à échelettes à champ compensé comprenant une lame prismatique en forme d'escalier et un miroir à échelettes ;
- La figure 8 : un interféromètre statique à échelettes à champ compensé comprenant une compensation de champ achromatique.

On appelle dans la suite de la description « un axe optique », un axe de propagation des ondes dans l'interféromètre. Plus particulièrement, dans la description, on s'intéresse à l'axe optique entre la lame prismatique et le miroir situé en vis à vis de la lame prismatique.

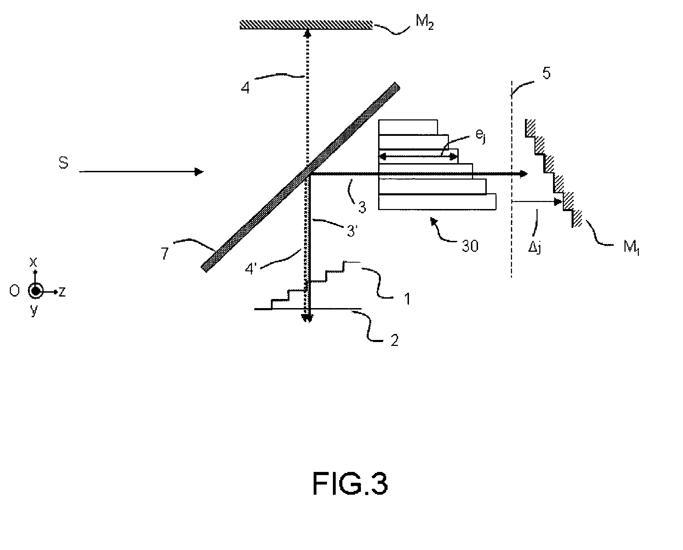

La figure 3 représente un mode de réalisation comprenant une pluralité de lames de verres empilées et un miroir à échelettes.

Ce mode de réalisation, appelé « Interféromètre à compensation totale des effets de champ », consiste à placer en face de chaque échelette, située à la distance $\Delta_j$ du plan de référence 5, une lame de verre d'épaisseur $e_j$.

Le miroir M$_1$ est disposé de manière à ce que chaque lame de verre d'épaisseur $e_j$ soit en regard d'une zone j correspondante du miroir à échelettes. Dans ce mode de réalisation la zone j est la surface réfléchissante d'une échelette.

Le plan de référence est le plan qui correspond à une position d'un miroir plan pour laquelle la différence de marche entre deux faisceaux 3', 4' réfléchis interférant est nulle.

Le miroir est orienté de sorte que la réflexion des faisceaux se réfléchissant sur le miroir à échelette ait la même direction selon l'axe optique que la direction des faisceaux incidents.

La valeur de l'épaisseur $e_j$ d'une lame de verre j est alors mesurée selon la formule suivante : $e_j = \Delta_j - n/(n-1)$.

Une compensation dite « totale » des effets de champ est donc obtenue pour chacune des échelettes j.

Dans ce mode de réalisation un empilement 30 de lames de verre est alors disposé dans l'un des bras de l'interféromètre entre la lame séparatrice 7 et un miroir M$_1$.

Chaque lame de verre correspond à une échelette et possède une épaisseur 31 permettant d'obtenir pour l'échelette correspondante la compensation de champ souhaitée. Il y a donc autant de lames de verre que d'échelettes.

Les faisceaux incidents 3, 4, provenant d'une source S ayant été séparés par la lame séparatrice 7, sont alors réfléchis sur les miroirs respectifs M$_1$ et M$_2$. Les faisceaux 3', 4' résultant des précédentes réflexions sont alors combinés après un second passage sur ou au travers de la lame séparatrice 7 présentant deux fronts d'ondes 1, 2 représentés sur la figure 3.

Les franges d'interférences présentent alors un contraste performant tout en étant affranchies de l'influence de l'angle de champ.

En revanche, ce mode de réalisation impose la réalisation d'un bloc de verre constitué d'un empilement de lames de verre. Ce mode de réalisation s'applique plus particulièrement pour des épaisseurs de lames supérieures à 1 mm typiquement. Cela, afin d'éviter toute biréfringence qui pourrait être introduite par le bloc de verre et qui aurait comme conséquence de réduire le contraste des franges d'interférence.

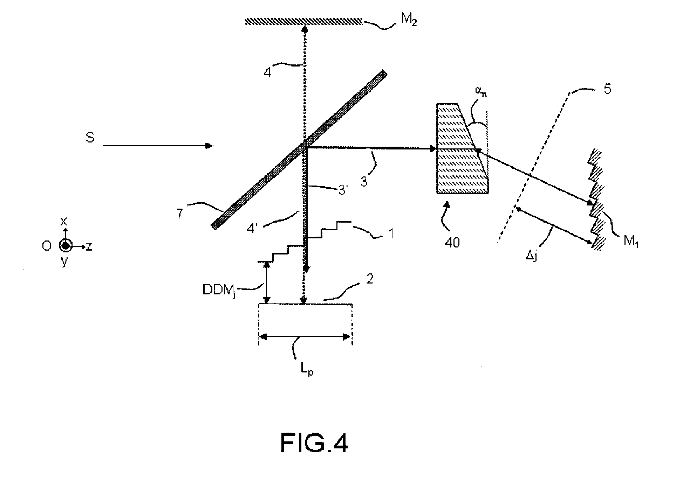

La figure 4 représente un second mode, préféré, de réalisation d'un interféromètre à compensation totale des effets de champ. Dans ce mode de réalisation, deux voies sont séparées par une lame séparatrice 7 orientée à 45°. Une Voie permet aux ondes 4 de se réfléchir sur un miroir plan $M_2$ statique. La seconde voie permet aux ondes 3 de traverser une lame prismatique 40 et de se réfléchir sur le miroir $M_1$. L'angle de prisme de la lame prismatique est appelé $\alpha_n$.

Dans ce dernier mode de réalisation, l'inclinaison $\alpha_n$ de la face de sortie de la lame prismatique, est choisi en fonction de la distance inter-échelettes du miroir $M_1$.

Les miroirs $M_1$ et $M_2$ sont orientés de manière à être en auto-collimation pour un faisceau en provenance du centre du champ. C'est à dire que l'orientation du miroir $M_1$ est déterminée de sorte que les directions des ondes respectivement incidente et réfléchie sur le miroir $M_1$ soient identiques.

Les différences de marches dépendent des distances, notée $\Delta_j$, entre chaque échelette et entre un plan 5 de référence. Le plan de référence correspond à une position d'un miroir plan pour laquelle la différence de marche entre les deux faisceaux 3', 4' réfléchis interférant est nulle.

Les fronts d'onde 1 et 2 sont représentés en sortie de l'interféromètre entre les faisceaux 3' et 4' réfléchis sur les miroirs $M_1$ et $M_2$.

La largeur de la pupille de l'interféromètre en sortie est notée $L_p$ et la différence de marche pour un faisceau se réfléchissant sur une échelette j est notée en sortie de l'interféromètre $DDM_j$.

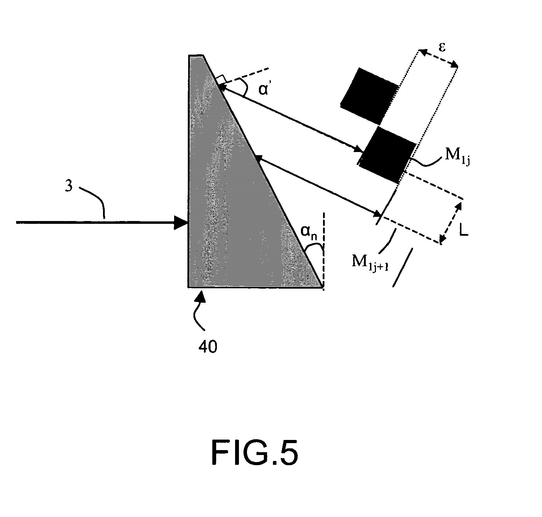

La figure 5 représente une partie de l'interféromètre de la figure 4, les faisceaux incidents 3, une lame prismatique 40 et le miroir à échelettes $M_1$.

Les paramètres physiques de la lame prismatique 40 et du miroir à échelettes $M_1$ sont les suivants :

$\varepsilon$ : distance inter-échelettes le long de l'axe optique.

L : Largeur des échelettes dans la direction perpendiculaire à l'axe optique.

$\alpha_n$ : angle du prisme.

$\alpha'$ : angle entre les faisceaux émergeants et la normale du prisme.

Dans le cas d'un interféromètre à compensation totale des effets de champ, les paramètres physiques $\varepsilon$, $\alpha'$ et $\alpha n$ s'écrivent:

$$\alpha_n = Arc\tan\left(\frac{n}{2.(n^2-1)}.\frac{DDM_T}{L_P}\right)$$

$$\alpha' = \arcsin\left[n.\sin(\alpha_n)\right]$$

$$\varepsilon = \frac{DDM_{Max}}{2.(n+1).N}$$

où:

- N : nombre d'échelettes que comprend le miroir à échelettes ;
- $DDM_T$ : variation de la différence de marche totale créé par le dispositif ;
- n : indice du matériau composant la lame prismatique ;
- Lp : largeur de la pupille de l'interféromètre.

Un des principaux avantages du dispositif selon l'invention est de permettre une compensation totale des effets de champ et donc permet une suppression du phénomène d'auto-apodisation.

En outre, l'invention permet une amélioration du gain en signal pour un interféromètre de l'état de l'art de taille comparable. Il est également possible d'utiliser un grandissement pupillaire pour réduire la taille et la masse des interféromètres statiques. Par ailleurs, le dispositif selon l'invention permet l'utilisation de composants optiques standards ne posant pas de problème majeur de réalisation.

Enfin, l'invention n'introduit pas de biréfringence induite par la réalisation du composant.

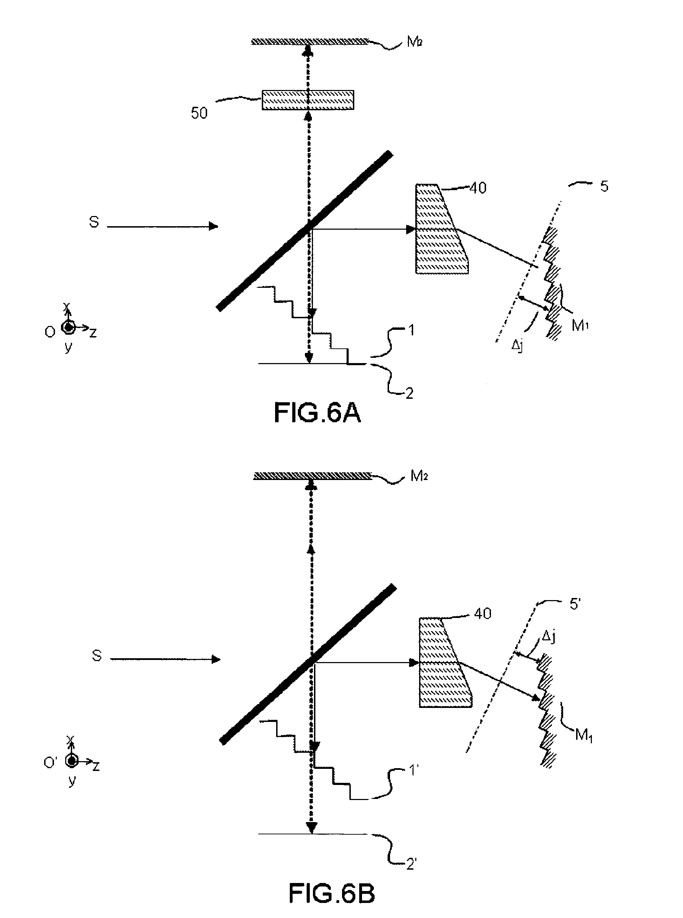

Les figures 6A et 6B représentent une variante de réalisation d'un interféromètre à compensation totale des effets de champ pour laquelle l'interféromètre est formé par l'empilement de deux tranches d'interféromètre.

On appelle une tranche d'interféromètre une portion de l'interféromètre dans laquelle une lame de verre peut être introduite devant l'un des miroirs de telle manière à former deux fronts d'ondes ayant une première caractéristique donnée en sortie de l'interféromètre. Une seconde portion de l'interféromètre ne comporte pas de lame de verre. Dans cette seconde portion, appelée tranche, deux autres fronts d'ondes présentent une seconde caractéristique donnée.

Lesdites caractéristiques données de chacun desdits fronts d'ondes permettent de réaliser une plus large couverture des différences de marche en sortie de l'interféromètre.

Cette solution permet de créer un décalage de différence de marche $\Delta_j$ représenté sous la forme du décalage du plan de référence 5 et 5' dans une première portion de l'interféromètre.

Une autre solution aurait pu être de disposer de miroirs comprenant deux parties chacun. Une première partie du miroir M1 et une première partie du miroir M2 ayant une première disposition dans un plan (O, x, y, $Z_1$) dans une première tranche et une seconde partie du miroir M1 et une seconde partie du miroir M2 dans une seconde tranche étant disposés dans un plan (O x, y, $z_2$).

En revanche cette dernière solution est plus complexe à mettre en oeuvre, les miroirs M1 et M2 devant alors comporter une discontinuité sur leur surface réfléchissante qui comprend deux parties.

Dans des variantes de réalisation il est possible d'empiler une pluralité de tranches d'interféromètre en disposant des lames de verre de différentes épaisseurs dans chaque tranche.

Dans la première tranche de l'interféromètre représenté sur la figure 6A, l'introduction d'une épaisseur de verre supplémentaire, représentée sous la forme de la lame à face parallèle 50, dans la voie du miroir $M_2$ permet de réaliser un décalage de différence de marche $\Delta_j$ représenté sous la forme du décalage du plan de référence 5 et 5'.

Le décalage est réalisé sans modification du dispositif de la voie opposée formée par le prisme 40 et le miroir $M_1$. Si l'épaisseur de la lame de verre 50 est ajustée vis à vis de la différence de marche produite par le miroir $M_1$, représentée par l'écart maximum entre les ondes 1 et 2, la suppression de lame de verre 50, supprimé sur la figure 6B dans la seconde tranche de l'interféromètre, permet de décaler le front d'ondes 2 en un front d'ondes 2'. Ce mode de réalisation permet de réaliser une couverture continue des différences de marche entre les deux tranches d'interféromètre.

L'intérêt de ce mode de réalisation est de réduire de moitié ou plus l'angle du prisme 40 pour une différence de marche totale donnée et pour une largeur de l'interféromètre donnée. En outre, le dispositif formé par le prisme 40 et le miroir $M_1$ est commun à toutes les tranches d'interféromètre.

Un quatrième mode de réalisation permet de disposer d'une lame prismatique 70 dont la face de sortie est accolée en vis à vis d'un miroir $M_1$ à échelettes.

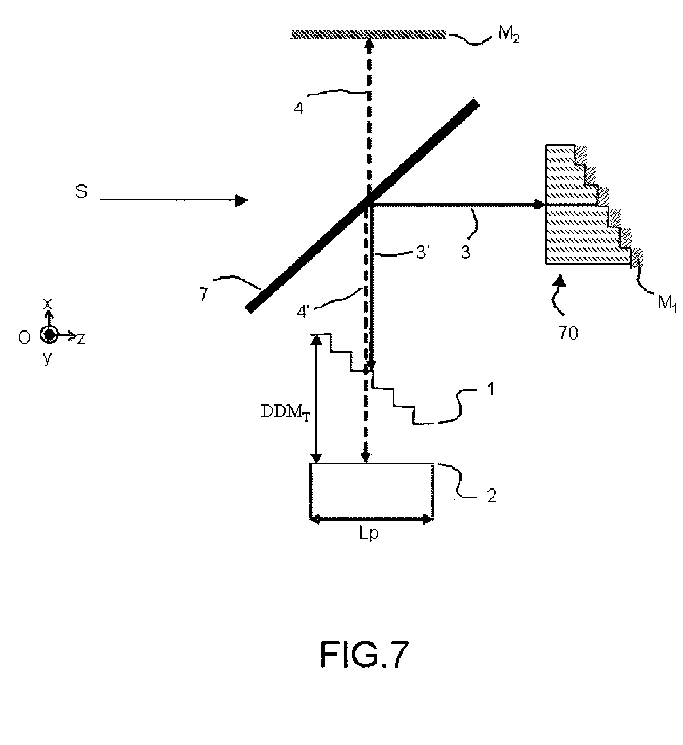

La figure 7 représente un autre exemple de réalisation de dispositif de compensation des effets de champs. Ce dispositif, appelé « Interféromètre à compensation partielle des effets de champ » comprend un bloc de verre 70 dont l'une des faces est taillée de manière à présenter une pluralité de surfaces identiques. Ces surfaces sont orientées perpendiculairement à l'axe optique et leur position le long de l'axe optique varie d'une échelette à l'autre.

Ces surfaces peuvent être revêtues d'un traitement réfléchissant remplaçant la fonction réfléchissante du miroir M1. Dans ce mode de réalisation, elles ont donc une fonction réfléchissante et elles constituent de ce fait le miroir à échelettes de cette voie de l'interféromètre.

Dans cet exemple de réalisation, chaque échelette est séparée d'une distance ε de la précédente. Dans ce mode de réalisation, cette distance est la même quelque soit l'échelette considérée.

L'alternative représentée sur la figure 4 et sur la figure 5 reste valable dans le cas d'un interféromètre à compensation partielle des effets de champ.

Dans ce cas, les expression paramètres $\alpha_n$, $\alpha'$ et ε définis précédemment sont les suivantes :

$$\alpha_n = Arc\tan\left(\frac{1}{2.n}.\frac{DDM_T}{L_P}\right)$$

$$\alpha' = \text{Arcsin}[n. \sin(\alpha_n)]$$

$$\varepsilon = \frac{DDM_{Max}}{2.n.N}$$

où :

- N : nombre d'échelettes que comprend le miroir à échelette ;
- $DDM_T$ : variation de la différence de marche totale créé par le dispositif ;
- n : indice du matériau composant la lame prismatique ;
- Lp : largeur de la pupille de l'interféromètre.

Un des principaux avantages du dispositif selon l'invention est de permettre une atténuation significatives des effets de champ et donc du phénomène d'auto-apodisation.

En outre, l'invention permet une amélioration du gain en signal pour un interféromètre de l'état de l'art de taille comparable. Il est également possible d'utiliser un grandissement pupillaire pour réduire la taille et la masse des interféromètres statiques. Par ailleurs, le dispositif selon l'invention permet l'utilisation de composants optiques standards pouvant être réalisés simplement.

Enfin, l'invention n'introduit pas de biréfringence induite par la réalisation du composant.

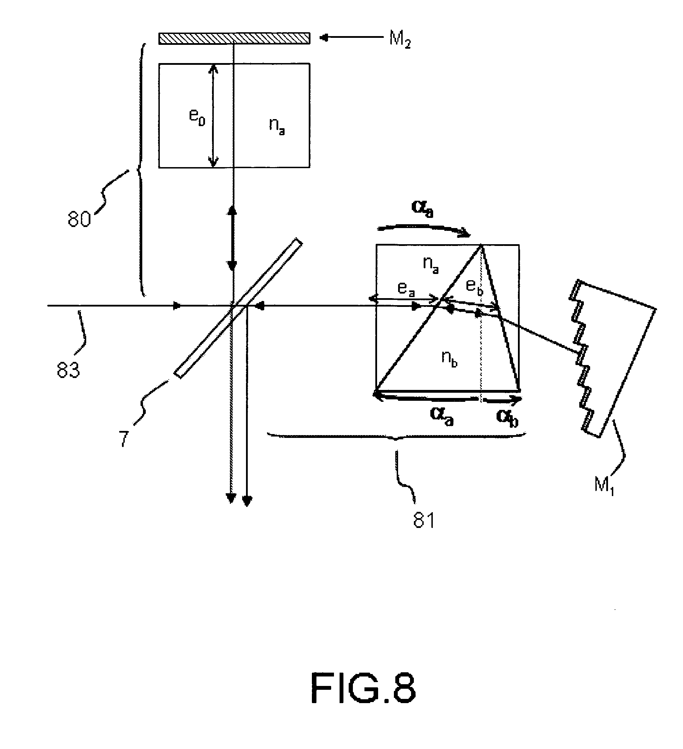

La Figure 8 représente un autre exemple de réalisation de dispositif de compensation des effets de champs. Dans cet exemple de réalisation, la compensation de champ est réalisée à partir d'un ensemble de deux prismes de matériaux et d'angles différents. Ce dispositif permet de s'affranchir de la variation de la différence de marche avec la longueur d'onde.

Dans cet exemple de réalisation, une première voie 80 de l'interféromètre, nommée « Voie lente », comprend une lame de matériau d'indice $n_a$ suivie d'un miroir plan M2. L'une des faces de cette lame peut être recouverte d'un dépôt réfléchissant faisant alors office de miroir plan.

La seconde voie 81, nommée « Voie rapide », est constituée de deux prismes accolés, de matériaux d'indices différents $n_a$ et $n_b$ et d'angles au sommet différents respectivement $\alpha_a$ et $\alpha_a + \alpha_b$, suivis d'un miroir à échelettes $M_1$.

La figure 8 représente les trajets d'un rayon 83 interceptant une échelette le long des deux voies de l'interféromètre. Pour le rayon représenté, la différence de marche, entre les voies lente et rapide, subie par un rayon se propageant le long de l'axe optique s'écrit :

$$DDM = 2.[ n_a.(e_0 - e_a) + n_b.e_b + L_1 - L_2].$$

Où:

- $e_0$ : épaisseur de verre traversée par le rayon se propageant dans la voie lente de l'interféromètre à travers le matériau d'indice $n_a$.
- $e_a$ : épaisseur de verre traversée par le rayon se propageant dans la voie rapide de l'interféromètre à travers le matériau d'indice $n_a$.
- $e_b$ : épaisseur de verre traversée par le rayon se propageant dans la voie rapide de l'interféromètre à travers le matériau d'indice $n_b$.
- $L_1$ : épaisseur d'air traversée par le rayon se propageant dans la voie lente de l'interféromètre entre la face de sortie de la lame d'indice $n_a$ et le miroir à échelettes.
- $L_2$ : épaisseur d'air traversée par le rayon se propageant dans la voie rapide de l'interféromètre entre la face de sortie de la lame d'indice $n_b$ et le miroir à échelettes.

La variation de cette différence de marche en fonction de la longueur d'onde λ s'écrit :

$$\frac{\partial \mathrm{DDM}}{\partial \lambda} = 2. \left[ \frac{\partial \mathrm{n_a}}{\partial \lambda}.(\mathrm{e_0} - \mathrm{e_a}) - \frac{\partial \mathrm{n_b}}{\partial \lambda}.\mathrm{e_b} \right]$$

Les variations d'indice $dn_a/d\lambda$ et $dn_b/d\lambda$ des matériaux d'indice respectifs $n_a$ et $n_b$ sont du même signe. La variation de chemin optique en fonction de la longueur d'onde sur la voie lente vient donc compenser celle sur la voie rapide.

Dans une approximation au 1 er ordre, ce mode de réalisation permet de définir une différence de marche achromatique. C'est-à-dire qu'une configuration d'interféromètre est obtenue dans laquelle le rapport du différentiel d'épaisseur de verre traversée dans les deux verres soit égal au rapport des pentes d'indices.

$$\frac{\Delta \mathrm{e_{na}}}{\Delta \mathrm{e_{nb}}} = -\frac{\mathrm{dn_b}\big/ \mathrm{d\lambda}}{\mathrm{dn_a}\big/ \mathrm{d\lambda}}$$

où :

$$\Delta \mathrm{e_{na}} = \mathrm{e_0} - \mathrm{e_a} \ \text{et} \ \Delta \mathrm{e_{nb}} = \mathrm{e_b}$$

Les angles $\alpha_a$ et $\alpha_b$ des prismes en matériaux d'indices $n_a$ et $n_b$ sont calculés et optimisés de manière à rendre négligeable la variation de la différence de marche avec la longueur d'onde en sortie de l'interféromètre

Ce dispositif de compensation de champ achromatique est valable à la fois dans les cas de des compensations de champ partielle et totale.

Dans ces différents modes de réalisations, l'invention présente l'avantage de permettre un plus large champ admissible en entrée de l'interféromètre. Le champ admissible est plus large notamment parce que la dépendance entre l'angle de champ et la différence de marche entre deux ondes qui interférent est considérablement réduit.

**Revendications**

1.  Interféromètre statique comportant une pupille d'entrée, une lame séparatrice (7), un premier miroir ($M_1$) et un second miroir ($M_2$) agencés de façon à ce que des faisceaux lumineux provenant d'une source (S) collimatée se divisent sur la lame séparatrice, se réfléchissent sur chacun des miroirs ($M_1$, $M_2$) et se recomposent en interférant en sortie de l'interféromètre, **caractérisé en ce que** l'interféromètre comporte au moins une lame prismatique (40) d'indice n, comportant une épaisseur $e_j$ variable, le premier faisceau (3) traversant la lame prismatique avant de se réfléchir sur une surface réfléchissante du premier miroir ($M_1$), la surface réfléchissante comportant une pluralité de zones, chaque zone j étant située à une distance moyenne $\Delta_j$ d'un plan de référence, la distance moyenne $\Delta_j$ variant d'une zone à une autre, le plan de référence étant perpendiculaire à l'axe optique entre la lame prismatique et le premier miroir (M1) et correspondant à une position d'un miroir plan pour laquelle la différence de marche entre les deux faisceaux réfléchis interférant est nulle, le premier miroir M1 et la lame prismatique étant positionnés de telle manière que pour une zone j donnée chaque épaisseur $e_j$ est sensiblement égale à $\Delta_j \cdot n/(n-1)$.

2.  Interféromètre statique selon la revendication 1, **caractérisé en ce que** la lame prismatique comprend une face perpendiculaire à l'axe optique comportant une pluralité de surfaces identiques dont la position le long de l'axe optique varie de telle manière que la face de la lame forme un escalier.

3.  Interféromètre statique selon la revendication 1, **caractérisé en ce que** la lame prismatique comprend une face dont la pente moyenne forme un angle $\alpha_n$ prédéterminée par rapport au plan perpendiculaire à l'axe optique.

4. Interféromètre statique selon l'une quelconque des revendications 2 à 3, **caractérisé en ce que** le premier miroir ($M_1$) est un miroir à échelettes.

5. Interféromètre statique selon la revendication 3, comprenant un empilement de plusieurs tranches d'interféromètre, **caractérisé en ce qu'**une lame à faces parallèles (50) est introduite dans une voie d'une tranche d'interféromètre afin de créer une continuité de différence de marche entre les différentes tranches.

6. Interféromètre statique selon l'une quelconque des revendications 4 à 5, **caractérisé en ce que** le premier miroir ($M_1$) est situé à une distance prédéfinie de la lame prismatique et qu'il est incliné de façon à ce que les ondes soient réfléchies dans la même direction que les ondes incidentes.

7. Interféromètre statique selon l'une quelconque des revendications 4 à 6, **caractérisé en ce que** l'angle d'inclinaison $\alpha_n$ du prisme est sensiblement égal à $\alpha_n = Arc\tan\left(\dfrac{n}{2.\left(n^2-1\right)}.\dfrac{DDM_T}{L_P}\right)$, où n est l'indice de la lame, $DDM_T$ la variation de différence de marche totale crée par le dispositif et $L_P$ la largeur de la pupille de l'interféromètre.

8. Interféromètre statique selon l'une quelconque des revendications 4 à 7, **caractérisé en ce que** la distance inter-échelettes $\varepsilon$ le long de l'axe optique est sensiblement égal à $\varepsilon = \dfrac{DDM_T}{2.\left(n+1\right).N}$, où N est le nombre d'échelettes que comprend le miroir.

9. Interféromètre statique selon l'une quelconque des revendications 2 à 8, **caractérisé en ce que** le premier miroir ($M_1$) est accolé à l'une des faces de la lame prismatique.

10. Interféromètre statique selon les revendications 2, 3, et 9, **caractérisé en ce que** l'angle d'inclinaison $\alpha_n$ du prisme est sensiblement égal à $\alpha_n = Arc\tan\left(\dfrac{1}{2.n}.\dfrac{DDM_T}{L_P}\right)$, où n est l'indice de la lame, $DDM_T$ la variation de différence de marche totale créé par le dispositif et $L_P$ la largeur de la pupille de l'interféromètre.

11. Interféromètre statique selon les revendications 2, 3, et 9, **caractérisé en ce que** la distance inter-échelettes $\varepsilon$ le long de l'axe optique est sensiblement égal à $\varepsilon = \dfrac{DDM_T}{2.n.N}$, où N est le nombre d'échelettes que comprend le miroir.

12. Interféromètre statique selon l'une quelconque des revendications 6 ou 9, **caractérisé en ce qu'**une seconde lame prismatique est accolée à la première lame dans une première voie de l'interféromètre, la première lame comportant un premier indice na et la seconde est positionné dans une seconde voie de l'interféromètre, ladite lame comportant un indice identique à celui de la première lame.

13. Interféromètre statique selon la revendication 12, **caractérisé en ce que** la première lame et la seconde lame comporte chacune au moins une face inclinée, la face inclinée de la première lame étant accolée à une face inclinée de la seconde lame, un premier angle $\alpha_a$ définissant l'inclinaison de la face inclinée de la première lame, un second angle $\alpha_b$ définissant l'inclinaison de la face inclinée de la seconde lame, les indices et les angles d'inclinaisons de chacune des lames étant déterminés de manière à rendre négligeable la variation de différence de marche avec la longueur d'onde en sortie de l'interféromètre.

**Claims**

1. A static interferometer comprising an entrance pupil, a splitter plate (7), a first mirror ($M_1$) and a second mirror ($M_2$),

which are arranged so that the light beams that originate from a collimated source (S) are divided on the splitter plate, are reflected on each of the mirrors ($M_1$, $M_2$) and are recomposed by interfering at the output of the interferometer, **characterised in that** the interferometer comprises at least one prismatic plate (40) of index n, having a variable thickness $e_j$, the first beam (3) passing through the prismatic plate before being reflected on a reflective surface of the first mirror ($M_1$), said reflective surface comprising a plurality of zones, each zone j being situated at a mean distance $\Delta_j$ from a reference plane, the mean distance $\Delta_j$ varying from one zone to the next, the reference plane being perpendicular to the optical axis between the prismatic plate and the first mirror ($M_1$) and corresponding to a position of a plane mirror for which the difference in pitch between the two interfering reflected beams is zero, the first mirror M1 and the prismatic plate being positioned so that for a given zone j, each thickness $e_j$ is substantially equal to $\Delta_j \cdot n/(n-1)$.

2.  The static interferometer according to claim 1, **characterised in that** the prismatic plate comprises a face that is perpendicular to the optical axis, which face comprises a plurality of identical surfaces, the position of which along the optical axis varies such that the surface of the plate forms a staircase.

3.  The static interferometer according to claim 1, **characterised in that** the prismatic plate comprises a face, the mean slope of which forms a predetermined angle $\alpha_n$ relative to the plane perpendicular to the optical axis.

4.  The static interferometer according to any one of claims 2 to 3, **characterised in that** the first mirror ($M_1$) is an echelette mirror.

5.  The static interferometer according to claim 3, comprising a stack of a plurality of interferometer slices, **characterised in that** a plate with parallel faces (50) is inserted into a channel of an interferometer slice so as to create continuity in the difference in pitch between the various slices.

6.  The static interferometer according to any one of claims 4 to 5, **characterised in that** the first mirror ($M_1$) is situated at a predefined distance from the prismatic plate and **in that** it is inclined so that the waves are reflected in the same direction as the incident waves.

7.  The static interferometer according to any one of claims 4 to 6, **characterised in that** the angle of inclination $\alpha_n$ of the prism is substantially equal to

    $$\alpha_n = Arc\tan\left(\frac{n}{2.(n^2-1)} \cdot \frac{DDM_T}{L_P}\right),$$ where n is the index of the plate, $DDM_T$ is the total pitch difference variation created by the device and $L_P$ is the width of the pupil of the interferometer.

8.  The static interferometer according to any one of claims 4 to 7, **characterised in that** the inter-step distance $\varepsilon$ along

    the optical axis is substantially equal to $\varepsilon = \dfrac{DDM_T}{2.(n+1).N}$, where N is the number of steps that the mirror comprises.

9.  The static interferometer according to any one of claims 2 to 8, **characterised in that** the first mirror ($M_1$) is attached to one of the faces of the prismatic plate.

10. The static interferometer according to claims 2, 3 and 9, **characterised in that** the angle of inclination $\alpha_n$ of the

    prism is substantially equal to $\alpha_n = Arc\tan\left(\dfrac{1}{2.n} \cdot \dfrac{DDM_T}{L_P}\right),$ where n is the index of the plate, $DDM_T$ is the total pitch difference variation created by the device and $L_P$ is the width of the pupil of the interferometer.

11. The static interferometer according to claims 2, 3 and 9, **characterised in that** the inter-step distance $\varepsilon$ along the

    optical axis is substantially equal to $\varepsilon = \dfrac{DDM_T}{2.n.N}$, where N is the number of steps that the mirror comprises.

12. The static interferometer according to claim 6 or 9, **characterised in that** a second prismatic plate is attached to the first plate in a first channel of the interferometer, the first plate comprising a first index na and the second plate is positioned in a second channel of the interferometer, said plate comprising an index that is identical to that of the first plate.

13. The static interferometer according to claim 12, **characterised in that** the first plate and the second plate each comprise at least one inclined face, the inclined face of the first plate being attached to an inclined face of the second plate, a first angle $\alpha_a$ defining the inclination of the inclined surface of the first plate, a second angle $\alpha_b$ defining the inclination of the inclined surface of the second plate, the indices and the angles of inclination of each of the slices being determined so as to render negligible the pitch difference variation with the wave length at the output of the interferometer.

**Patentansprüche**

1. Statischer Interferometer, der Folgendes umfasst: eine Eintrittspupille, eine Teilerplatte (7), einen ersten Spiegel ($M_1$) und einen zweiten Spiegel ($M_2$), die so angeordnet sind, dass die von einer kollimierten Quelle (S) kommenden Lichtstrahlen auf der Teilerplatte geteilt, auf jedem der Spiegel ($M_1$, $M_2$) reflektiert und unter Überlagerung am Ausgang des Interferometers wieder zusammengesetzt werden, **dadurch gekennzeichnet, dass** der Interferometer wenigstens eine Prismaplatte (40) mit Index n und mit einer variable Dicke $e_j$ umfasst, wobei der erste Strahl (3) durch die Prismaplatte geht, bevor er auf einer reflektierenden Fläche des ersten Spiegels ($M_1$) reflektiert wird, wobei die reflektierende Fläche mehrere Zonen aufweist, wobei sich jede Zone j in einer mittleren Distanz $\Delta_j$ von einer Referenzebene befindet, wobei die mittlere Distanz $\Delta_j$ von einer Zone zur nächsten variiert, wobei die Referenzebene lotrecht zur optischen Achse zwischen der Prismaplatte und dem ersten Spiegel ($M_1$) ist und einer Position eines Planspiegels entspricht, für den die Schrittdifferenz zwischen den beiden interferierenden reflektierten Strahlen null ist, wobei der erste Spiegel M1 und die Prismaplatte so positioniert sind, dass für eine gegebene Zone j jede Dicke $e_j$ im Wesentlichen gleich $\Delta_j \cdot n/(n-1)$ ist.

2. Statischer Interferometer nach Anspruch 1, **dadurch gekennzeichnet, dass** die Prismaplatte eine Fläche lotrecht zur optischen Achse aufweist, wobei die Fläche mehrere identische Oberflächen aufweist, deren Position entlang der optischen Achse so variiert, dass die Fläche der Platte treppenförmig ist.

3. Statischer Interferometer nach Anspruch 1, **dadurch gekennzeichnet, dass** die Prismaplatte eine Fläche aufweist, deren mittlere Neigung einen vorbestimmten Winkel $\alpha_n$ in Bezug auf die Ebene lotrecht zur optischen Achse bildet.

4. Statischer Interferometer nach einem der Ansprüche 2 bis 3, **dadurch gekennzeichnet, dass** der erste Spiegel ($M_1$) ein Echelette-Spiegel ist.

5. Statischer Interferometer nach Anspruch 3, der einen Stapel von mehreren Interferometerscheiben umfasst, **dadurch gekennzeichnet, dass** eine Platte mit parallelen Flächen (50) in einen Kanal einer Interferometerscheibe eingeführt wird, um Kontinuität der Schrittdifferenz zwischen den verschiedenen Scheiben zu erzeugen.

6. Statischer Interferometer nach einem der Ansprüche 4 bis 5, **dadurch gekennzeichnet, dass** sich der erste Spiegel ($M_1$) in einer vordefinierten Distanz von der Prismaplatte befindet und so geneigt ist, dass die Wellen in derselben Richtung reflektiert werden wie die einfallenden Wellen.

7. Statischer Interferometer nach einem der Ansprüche 4 bis 6, **dadurch gekennzeichnet, dass** der Neigungswinkel $\alpha_n$ des Prismas im Wesentlichen gleich $\alpha_n = Arc\tan\left(\frac{n}{2.(n^2-1)} \cdot \frac{DDM_T}{L_P}\right)$ ist, wobei n der Index der Platte, $DDM_T$ die von der Vorrichtung erzeugte Variation der Gesamtschrittdifferenz und $L_P$ die Breite der Pupille des Interferometers ist.

8. Statischer Interferometer nach einem der Ansprüche 4 bis 7, **dadurch gekennzeichnet, dass** die Zwischenstufendistanz $\varepsilon$ entlang der optischen Achse im Wesentlichen gleich $\varepsilon = \frac{DDM_T}{2.(n+1).N}$ ist, wobei N die Zahl der Stufen ist, die der Spiegel umfasst.

9. Statischer Interferometer nach einem der Ansprüche 2 bis 8, **dadurch gekennzeichnet, dass** der erste Spiegel ($M_1$) an einer der Flächen der Prismaplatte angebracht ist.

10. Statischer Interferometer nach den Ansprüchen 2, 3 und 9, **dadurch gekennzeichnet, dass** der Neigungswinkel

$\alpha_n$ des Prismas im Wesentlichen gleich $\alpha_n = Arc\tan\left(\dfrac{1}{2.n}\cdot\dfrac{DDM_T}{L_P}\right)$ ist, wobei n der Index der Platte, $DDM_T$ die von der Vorrichtung erzeugte Variation der Gesamtschrittdifferenz und $L_P$ die Breite der Pupille des Interferometers ist.

11. Statischer Interferometer nach den Ansprüchen 2, 3 und 9, **dadurch gekennzeichnet, dass** die Zwischenstufendistanz entlang der optischen Achse im Wesentlichen gleich $\varepsilon = \dfrac{DDM_T}{2.n.N}$ ist, wobei N die Zahl der Stufen ist, die der Spiegel umfasst.

12. Statischer Interferometer nach Anspruch 6 oder 9, **dadurch gekennzeichnet, dass** eine zweite Prismaplatte an der ersten Platte in einem ersten Kanal des Interferometers angebracht ist, wobei die erste Platte einen ersten Index na hat und die zweite Platte in einem zweiten Kanal des Interferometers positioniert ist, wobei die Platte einen Index hat, der mit dem der ersten Platte identisch ist.

13. Statischer Interferometer nach Anspruch 12, **dadurch gekennzeichnet, dass** die erste Platte und die zweite Platte jeweils wenigstens eine geneigte Fläche, wobei die geneigte Fläche der ersten Platte an einer geneigten Fläche der zweiten Platte angebracht ist, einen ersten Winkel $\alpha_a$, der die Neigung der geneigten Fläche der ersten Platte definiert, und einen zweiten Winkel $\alpha_b$ haben, der die Neigung der geneigten Fläche der zweiten Platte definiert, wobei die Indexe und die Neigungswinkel jeder der Platten so bestimmt werden, dass die Variation der Schrittdifferenz mit der Wellenlänge am Ausgang des Interferometers vernachlässigbar wird.

FIG.1

FIG.2

FIG.3

FIG.4

# FIG.5

**FIG.6A**

**FIG.6B**

# FIG.7

# FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CA 230994